# EUROPEAN PATENT APPLICATION

(11) **EP 4 112 214 A1**
(43) Date of publication of application: **04.01.2023**
(21) Application number: 21182756.3
(22) Date of filing: 30.06.2021
(51) Int. Cl.: B23G 5/06

(54) **A THREAD CUTTING TOOL FOR METAL CUTTING**

(71) Applicant: WALTER AG, 72072 Tübingen (DE)
(72) Inventor: SCHWARTZ, Friedrich, 72072 Tübingen (DE); BIHRER, Martin, 72072 Tübingen (DE)
(74) Representative: Sandvik

(57) **Abstract**

A thread cutting drill tool for metal cutting comprising an elongate main body, which comprises a cutting section (4) extending axially rearward from a front end (1). The cutting section (4) comprises an axially extending chip flute (5), an axially extending land (6), and a plurality of axially spaced teeth (8), wherein each tooth (8) of the plurality of teeth extends from the chip flute (5) across the land (6). Each tooth of the plurality of teeth comprises at least one of an axially forward facing front flank (10) and an axially rearward facing rear flank (11), a radially outward facing crest (12), which crest connects to each of the at least one of the front flank (10) and the rear flank (11), and at least one cutting edge (14, 15, 16). The cutting edges of the plurality of teeth comprises a set of crest cutting edges (14), wherein each crest cutting edge (14) is formed by an intersection of the crest (12) of one respective tooth (8) of the plurality of teeth with the chip flute (5). The cutting edges of the plurality of teeth comprises a set of front finishing edges (15), wherein each front finishing edge (15) is formed by an intersection of the front flank (10) of one respective tooth (8) of the plurality of teeth with the chip flute (5). The cutting edges of the plurality of teeth comprises a set of rear finishing edges (16), wherein each rear finishing edge (16) is formed by an intersection of the rear flank (11) of one respective tooth (8) of the plurality of teeth with the chip flute (5). A most forward tooth (9) of the plurality of teeth comprises a first single cutting edge, wherein the first single cutting edge is one of the crest cutting edges (14) of the set of crest cutting edges.

## Description

### Technical field

The present invention relates to a thread cutting drill tool for metal cutting.

### Background

Metal components comprising cooperating elements in form of one element with an internal thread and one element with an external thread, such as for example screw connections, are used in many various fields. Consequently, a variety of different cutting tools for providing a metal workpiece with an internal thread have been developed, and in particular, thread cutting taps. Such taps are conventionally provided with a thread that forms a helix along an axis of rotation of an elongated body. The thread is interrupted by axially extending chip flutes such that the helical thread presents a number of cutting edges at each intersection with each chip flute. Consecutive cutting edges along the interrupted helical thread typically extends further radially outward the further axially rearward they are located.

A known process for providing a metal workpiece with an internal thread is to first pre-drill a hole in the workpiece with a conventional drill tool. Thereafter, the thread cutting tap is inserted into the pre-drilled hole. The thread cutting tap is then rotated and pushed axially forward, wherein the cutting edges remove material from the inner surface of the pre-drilled hole. Thereby, consultive teeth along the interrupted helical thread cut further and further into the inner surface so that the internal thread is gradually cut.

A problem with prior art thread cutting taps is that, for some applications, the surface finish of the flanks of the produced internal thread can be insufficient. For example, a rough surface may cause formation of cracks when the thread is subjected to dynamic forces.

### Summary

It is an object of the present invention to mitigate the shortcomings of the prior art and to provide a thread cutting drill tool for metal cutting that improves the surface finish of thread flanks cut therewith. This object is achieved according to the invention by means of a thread cutting drill tool according to claim 1.

The present invention relates to a thread cutting drill tool for metal cutting comprising an elongate main body, which
- has a front end, a rear end and a central longitudinal axis extending from the front end to the rear end,
- is configured rotatable in a direction of rotation around the central longitudinal axis, and
- comprises a cutting section which extends axially rearward from the front end,
wherein the cutting section comprises
- an axially extending chip flute,
- an axially extending land, which, in the rotational direction connects to and is trailing the chip flute,
- a plurality of axially spaced teeth, wherein each tooth of the plurality of teeth extends from the chip flute across the land, and comprises
   - at least one of an axially forward facing front flank and an axially rearward facing rear flank,
   - a radially outward facing crest, which crest connects to each of the at least one of the front flank and the rear flank, and
   - at least one cutting edge,
wherein
- the cutting edges of the plurality of teeth comprises a set of crest cutting edges, wherein each crest cutting edge is formed by an intersection of the crest of one respective tooth of the plurality of teeth with the chip flute,
- the cutting edges of the plurality of teeth comprises a set of front finishing edges, wherein each front finishing edge is formed by an intersection of the front flank of one respective tooth of the plurality of teeth with the chip flute,
- the cutting edges of the plurality of teeth comprises a set of rear finishing edges, wherein each rear finishing edge is formed by an intersection of the rear flank of one respective tooth of the plurality of teeth with the chip flute, and
- a most forward tooth of the plurality of teeth comprises a first single cutting edge, wherein the first single cutting edge is one of the crest cutting edges of the set of crest cutting edges.

Thus, the inventive thread cutting drill tool of the present invention comprises at least one land that includes one set of cutting edges and two set of finishing edges. The set of cutting edges comprises crest cutting edges, which, during operation, cut material radially inward in a workpiece. Thereby, a thread groove, for example a helical thread groove, is formed in the workpiece and the material left between the turns of the helical thread groove form the internal thread. The thread groove is delimited on each axial side by one thread flank of one respective consecutive turn of the thread that is being cut.

The most forward tooth of the plurality of teeth comprises a single cutting edge which is one of the crest cutting edges.

The two sets of finishing edges comprise one set of front finishing edges and one set of rear finishing edges. During operation, each front finishing edge operate on an axially rearward facing thread flank of the thread that is being cut, and each rear finishing edge operate on an axially forward facing thread flank of the thread that is being cut. Due to the most forward tooth comprising one crest cutting edge while lacking both front and rear finishing edges, each of the front and the rear finishing edges are located axially rearward of at least the crest cutting edge on the most forward tooth. Thus, during operation, the front and the rear finishing edges follow rotationally behind at least one crest cutting edge. Thereby, the front and the rear finishing edges smoothen any rough surface left on the thread flanks by at least one crest cutting edge. Consequently, the surface finish of the thread flanks of the internal thread produced in the workpiece is improved.

A thread cutting drill tool according to the present invention is suitable for cutting an internal thread in a metal workpiece by removing material from an internal surface in the workpiece, and constitutes for example an internal thread cutting tap. Furthermore, the present thread cutting drill tool is suitable to be operated in a pre-drilled hole in a workpiece, wherein the thread cutting drill tool has a larger outer diameter than the inner diameter of the pre-drilled hole.

The thread cutting drill tool comprises an elongate main body having a front end, a rear end and a central longitudinal axis extending from the front end to the rear end. The thread cutting drill tool is configured rotatable in a direction of rotation around the central longitudinal axis. During use, the axis of rotation is preferably a central axis of the pre-drilled hole in the workpiece. When operated, the thread cutting drill tool is preferably rotated around and advanced forward along the same central longitudinal axis. Preferably, the workpiece is of metal such as a ISO P material. The workpiece may for example be a component that is to be attached to another component by a fastener with an external thread, for example as screw, which is screwed into the threaded hole of the workpiece.

The thread cutting drill tool has a cutting section at a front end. Preferably, the cutting section is an axial length portion of the elongate body. According to an embodiment, the thread cutting drill tool comprises further sections, such as a coupling section at a rear end for providing a mounting interface. Optionally, the mounting interface is designed to be coupled to a rotatable machine spindle or to an adapter for a rotatable machine spindle. Preferably, the coupling section is a shaft that is integral with the main body.

The cutting section comprises an axially extending chip flute and an axially extending land. The land is trailing the chip flute in the direction of rotation. Both the land and the chip flute have a rotationally leading edge and a rotationally trailing edge, wherein preferably the trailing edge of the chip flute is the leading edge of the land.

Optionally, the chip flute is arranged parallel with the central longitudinal axis, is arranged inclined with respect to the central axis of rotation or is arranged along a curve, for example a helix, in the peripheral, radially facing surface of the cutting section of the main body. A chip flute that is parallel with central longitudinal axis, also referred to as an axially straight chip flute, is advantageous for breaking up chips into smaller pieces. An inclined or helical chip flute is advantageous for transporting chips rearward along the tool.

The cutting section further comprises a plurality of teeth. Each tooth of the plurality of teeth extends from the chip flute and across the land. Thus, preferably each tooth is rotationally trailing the chip flute and extends rotationally behind the trailing edge of the chip flute/the leading edge of the land, optionally all the way to the trailing end of the land.

According to an embodiment, the thread cutting tool comprises at least two of the chip flutes and at least two of the lands, for example two, three, four or five. Each of the at least two lands is delimited by a rotationally leading and a rotationally trailing chip flute. Preferably, each of the plurality of teeth extends from the trailing edge of the leading chip flute to the leading edge of the trailing chip flute. Preferably, the plurality of teeth of all the at least two lands are aligned in the direction of rotation to form a helix interrupted by the chip flutes. Alternatively, the plurality of teeth form a few parallel helices, such as two or three parallel helices, each interrupted by the chip flutes. Thanks to there being several teeth in each turn, each cutting edge may cut at a smaller cutting depth. Another advantage is that cutting loads are more evenly distributed around the thread cutting drill tool, so that the tool is better balanced.

Preferably, the plurality of teeth, in the axial direction, are separated by grooves, in other words valleys, which extend in parallel with the teeth across the land. Each tooth comprises a crest, and at least one of an axially forward facing front flank and an axially rearward facing rear flank. Optionally, all teeth have both a front flank and a rear flank. Alternatively, the most forward tooth has a crest that runs out at the front end, so that a front flank is lacking, and/or the rearward most tooth has a crest that runs out at the rear end so that a rear flank is lacking.

Furthermore, each tooth comprises at least one cutting edge. At least one tooth of the plurality of teeth has a cutting edge in form of a crest cutting edge. Each crest cutting edge is formed by an intersection of the crest of the respective tooth with the chip flute. At least one tooth of the plurality of teeth has a cutting edge in form of a front finishing edge. Each front finishing edge is formed by an intersection of the front flank of the respective tooth with the chip flute. At least one tooth of the plurality of teeth has a cutting edge in form of a rear finishing edge. Each rear finishing edge is formed by an intersection of the rear flank of the respective tooth with the chip flute.

Each cutting edge is arranged such that it contacts and removes material from the workpiece when the thread cutting drill tool is rotated and axially advanced during operation. Optionally, the thread cutting drill tool comprises other edges formed by an intersection of a flank or a crest with the chip flute, which do not constitute cutting edges. Such edges may for example be set back in relation to a cutting edge rotationally in front thereof.

According to an embodiment, the thread cutting drill tool is configured for a radial cutting depth. A radial inward extension of the each crest cutting edge is according to the embodiment at most the radial cutting depth. The cutting depth corresponds to the thickness of chips being cut. Thus, a crest cutting edge preferably extends over a corner region/edge region and a small distance corresponding to the radial cutting depth inward along the flanks.

Optionally, the each crest cutting edge is inclined such that a radial distance from the crest cutting edge to the central axis of rotation increases axially rearward along the each crest cutting edge. According to an embodiment, the cutting section comprises a chamfer at the front end, which chamfer comprises tapering teeth of the plurality of teeth. Preferably, each tooth of the chamfer is designed based on the same main profile, or in other words, same main longitudinal cross section, as all other teeth of the chamfer. A radially outer part of the main profile is cut away to create the specific individual profile for each tooth of the chamfer. Thereby, a crest that is inclined facing forward is achieved. A crest cutting edge formed by an intersection of such an inclined crest with the chip flute may form the inclined crest cutting edge. An inclined crest cutting edge advantageously reduces the cutting load when the thread cutting drill tool enters a workpieces. Another advantage is that cutting forces are distributed more evenly over the cutting edge.

Preferably, the set of crest cutting edges comprises at most 5, preferably at most 3, crest cutting edges. This embodiment is advantageous for cutting threads in short holes, especially blind holes.

According to an embodiment, the cutting section of the thread cutting drill tool comprises 2 - 5 teeth of the plurality of teeth, which each has one of the at most 5 crest cutting edges. Preferably, each of the at most 5 crest cutting edges is comprised in the chamfer and each of the at most 5 crest cutting edges is an inclined crest cutting edge as described above. Preferably, each inclined crest cutting edge of the at most 5 crest cutting edges has the same inclination. Preferably, each crest cutting edge of the chamfer extend along a common axis, which is inclined relative the central longitudinal axis. Thereby, each crest cutting edge is designed to cut chips with equal thickness so that cutting forces are evenly distributed among the crest cutting edges.

According to an embodiment, the set of front finishing edges and the set of rear finishing edges are located axially rearward of the set of crest cutting edges. Thereby, the finishing edges follow after all crest cutting edges. An advantage therewith is that a thread front flank and a thread rear flank of the thread to be cut and that has been smoothened by a rear finishing edge and a front finishing edge, respectively, will not be negatively affected by a following pass of radially cutting crest cutting edge. Instead, a final finishing of the rear flank and the front flank is provided by the finishing edges. According to an embodiment, the forward most rear finishing edge is located on the same tooth as the rearward most crest cutting edge. Alternatively, each crest cutting edge is a single cutting edge. Alternatively, the forward most of the finishing edges is a front finishing edge, which is located on a tooth following directly axially rearward of the set of chamfer teeth.

Optionally, the set of front finishing edges includes a single front finishing edge, and the set of rear finishing edges includes a single rear finishing edge.

Generally, all teeth having a single cutting edge from any of the sets lack cutting edges from any of the other sets. For example, a tooth having a single front cutting edge lack both rear and front finishing edges.

Preferably, the each front finishing edge and the each rear finishing edge are configured for a maximal finishing cutting depth of 15 - 70 %, preferably 15 - 50 % and more preferably 30 - 35 %, of the maximal radial cutting depth. Thereby, it is ensured that the finishing edges, cut sufficiently deep to smoothen the surface cut by the crest cutting edges in front of them, while not introducing too much additional torque. The finishing edges cut small, thin chips and may create surface finish similar to a ground surface.

According to an embodiment, axially between each two axially consecutive teeth of the plurality of teeth, a root surface connects the rear flank of an axially forward tooth of the each two axially consecutive teeth with the front flank of an axially rearward tooth of the each two axially consecutive teeth. At least one of the rear flank and the front flank connected by a first root surface comprises one rear finishing edge of the set of rear finishing edges or one front finishing edge of the set of front finishing edges. Thus, the first root surface is, at an intersection with the chip flute, delimited by one rear finish edge or one front finishing edge or both. With respect to a second root surface, the rear flank lack one rear finishing edge of the set of rear finishing edges, and the front flank lack one front finishing edge of the set of front finishing edges. Thus, the second root surface is located between flanks without finishing edges.

According to an embodiment, the root radial distance of each first root surface is larger than the root radial distance of each second root surface. This embodiment provides a design that is advantageous for production of the thread cutting drill tool. Since the front finishing edge and the rear finishing edge are located on either side of a root surface of a grove between two consecutive teeth, both finishing edges can be ground by the same grinding wheel. Furthermore, the groove with the first root surface and finishing edge/edges is slightly narrower in the axial direction, or in other words, smaller widthwise, than the groove with second root surface. Thereby, during operation, only flanks with finishing edges cut, while other flanks go clear either behind a crest cutting edge or behind a flank finishing edge. Accordingly, both the groove with the first root surface and the groove with the second root surface can advantageously be produced with the same grinding wheel. When grinding the first root surface, the grinding wheel is advanced a shorter radial distance into the land than when grinding the second root surface.

Preferably, adjacent each crest cutting edge, the chip flute comprises a crest rake surface, and at least each crest rake surface has crest rake angle of less than 12°, preferably less than 6° and more preferably of 2 - 4°. The crest rake angle is positive, but may in some embodiments be negative. Generally, a cutting edge with a small rake angle constitutes a strong cutting edge that can cut at a higher cutting depth and speed than a cutting edge with a large positive rake angle. Large cutting depths and speeds are advantageous with respect to productivity. Another advantage of a cutting edge having a small rake angle is that the cut chips are shorter than chips cut with a cutting edge having a large rake angle. Short chips are favorable when cutting internal threads in blind holes because they are easier to evacuate through the chip flutes. However, cutting edges with small rake angles tend to leave a more rough surface than cutting edges with large rake angles. Consequently, the inventive finishing edges of the present invention are especially advantageous for thread cutting drill tool with small rake angles at the crest cutting edges.

According to an embodiment, a portion of the chip flute, a portion of the land, and a portion of at least two teeth of the plurality of teeth are located on a replaceable cutting insert. The portion of the at least two teeth comprises at least one crest cutting edge of the set crest cutting edges, at least one rear finishing edge of the set of rear finishing edges and at least one front finishing edge of the set of front finishing edges. Preferably, each crest cutting edge of set of crest cutting edges are located on the teeth of the replicable cutting insert. Thereby, cutting edges and finishing edges can be replaced so that not the entire thread cutting drill tool has to be discarded when the edges are worn down.

Optionally, the thread cutting drill tool is provided with internal coolant, such as for example an axially extending central coolant channel with or without radial branches extending to outlets at the teeth.

### Brief description of the drawings

In the following, example embodiments will be described in greater detail and with reference to the accompanying drawings, in which:
Fig. 1 is a perspective view of a first embodiment of the thread cutting drill tool according to the present invention;
Fig. 2 is a schematic, longitudinal side view of the first embodiment;
Fig. 3 is a transverse cross section of the first embodiment of Fig. 1,
Figs. 4a - 4c are schematic views of corresponding to Fig. 2 in different position during operation;
Fig. 5 is a diagram of cutting edges of all lands;
Figs. 6a - 6c are longitudinal side views corresponding to Fig. 2 of alternative embodiments of the tread cutting drill tool;
Fig. 7 is a perspective view of a cutting insert mounted to a holder, which together form another embodiment of the thread cutting drill tool.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

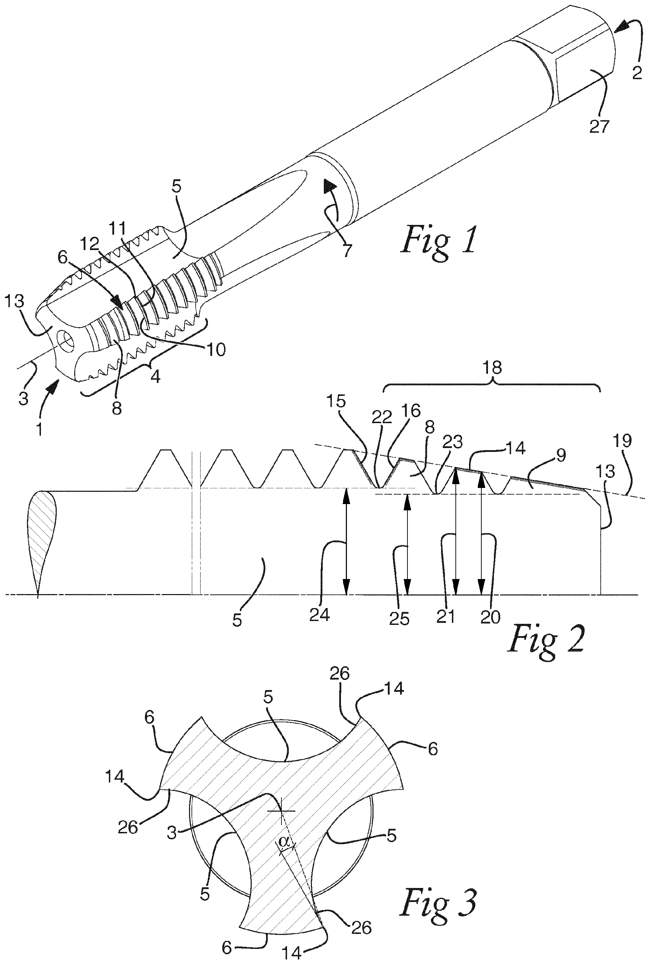

With reference to Figs. 1- 5, a first example embodiment of a thread cutting drill tool according the present invention is descried. The embodiment of the thread cutting drill tool is in form of an internal thread cutting tap. The tap comprises an elongate main body with a front end 1, a rear end 2 and a central longitudinal axis 3 extending from the front end 1 to the rear end 2. The tap is configured to be rotatable around the axis 3 in a direction of rotation 7.

At the rear end 2, the tap has coupling section in form of an integral shaft 27.

A cutting section 4 extends axially rearward from the front end 1.The cutting section 4 compromises three axially extending chip flutes 5 and three axially extending lands 6. Each chip flute 5 extends in parallel with the central longitudinal axis 3. Each land 6 is associated with and connected to a respective one of the chip flutes 5. In the direction of rotation 7, each land 6 is trailing behind the associated chip flute 5. A plurality of axially spaced teeth 8 extend across one of the land from the associated chip flute 5. The teeth 8 of the lands 6 are aligned in the direction of rotation 7 to form a helix interrupted by the flutes 5. Furthermore, the cutting section 4 comprises a plurality of cutting edges 14, 15, 16.

Since all lands 6 and chip flute 5 have corresponding features, in the following, only one of the lands 6, the teeth located thereon and the therewith associated chip flute 5 will be described with reference to Figs. 2 and 3.

In the example embodiment, each of the teeth 8 except the most forward tooth 9 comprises an axially forward facing front flank 10 and an axially rearward facing rear flank11.

A radially outward facing crest 12 connects the front flank 10 and the rear flank 11 of the teeth 8. The most forward tooth 9 lacks a front flank 10. Instead, the crest 12 thereof runs out into a front end surface 13 at the front 1. The front end surface 13 forms an axial plane which is normal to the axis 3 and faces forward.

The tap according the described first embodiment has no cutting edges arranged in the front end surface 13. In other embodiments, the front end surface may constitute a drill tip with radially extending drill cutting edges or be provided with guide pin, or other suitable fronts. Thereby a combination tool comprising a front end with a first function, and a rear part comprising an embodiment of the inventive thread cutting drill tool for providing an internal thread is provided.

The plurality of teeth 8 comprises a set of crest cutting edges 14. Each crest cutting edge 14 is formed by an intersection of the crest 12 with the chip flute 5. Furthermore, the plurality of teeth 8 comprises a set of front finishing edges 15 and a set of rear finishing edges 16. Each front finishing edge 15 is formed by an intersection of the front flank 10 with the chip flute 5. Each rear finishing edge 16 is formed by an intersection of the rear flank 11 with the chip flute 5.

In the axial direction, each crest cutting edge 14 extends across the crest. Furthermore, each crest cutting edge 14 extends a short distance on each side of the crest. Thus, the crest cutting edge 14 extends over the two corners/edges of the crest and further a short distance radially inwards along the flanks and toward the axis 3. The short distance radially inwards corresponds to a radial cutting depth of the tap. For example, a tap of a size suitable for cutting an internal M12 thread, has a cutting depth of 0,1 mm, and a tap suitable for cutting an internal M24 thread has a cutting depth of 0,15 mm. However, a tap of a size suitable for cutting an internal M12 thread may have a cutting depth of up to 0,5 mm, and a tap suitable for cutting an internal M24 thread may have a cutting depth of up to 0,86 mm.

The front and rear finishing edges 15, 16 are both configures to cut at a depth of 33% of the cutting depth of the crest cutting edges 14.

The most forward tooth 9 comprises a single cutting edge, or in other words, only one cutting edge from only one of the sets. Specifically, the single cutting edge of the most forward tooth 9 is a first crest cutting edge 14. Also the second most forward tooth 17 comprises a the single cutting edge in form of a second crest cutting edge 14.

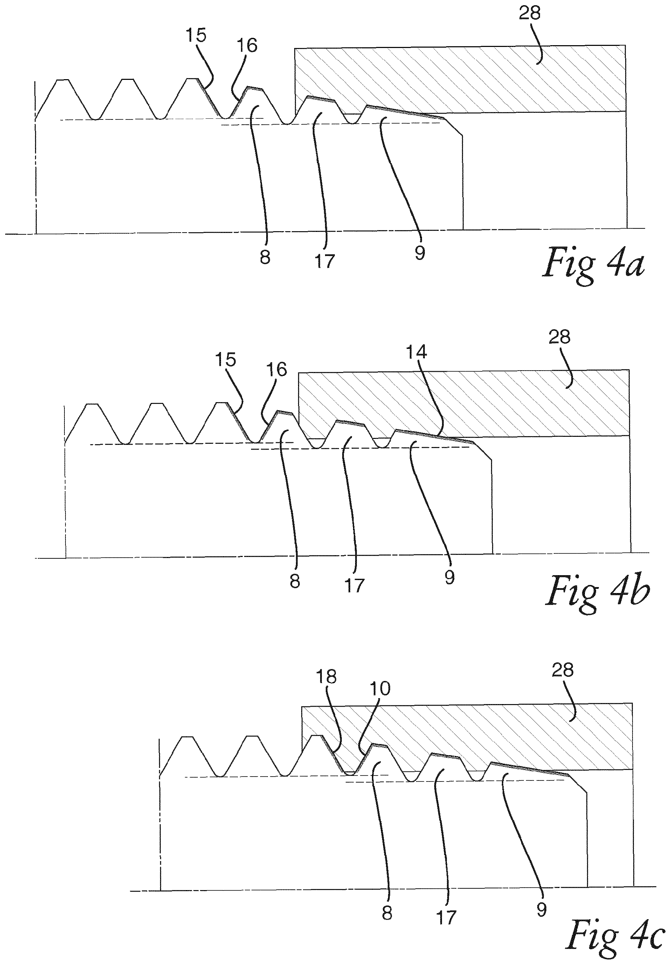

The cutting section comprises a chamfer 18, wherein three of the teeth 8, including the most forward tooth 9, are tapering. The crest 12 of the tapering teeth 8 is inclined facing forward, so that an inclined crest cutting edge 14 is formed at the intersection with the chip flute 5. A radial distance 20 from the central axis of rotation 3 to a front end of the inclined crest cutting 14 is smaller than a radial distance 21 from the central axis of rotation 3 to a rear end of the crest cutting edge 14. The three inclined crest cutting edges 14 have the same inclination and, as viewed in the side view of Fig 4, extend along a common inclination axis 19.

Two axially consecutive teeth 8 are separated by a grove/valley extending between and in parallel with teeth 8 across the land 6. In the groove, a root surface connects the flanks10, 11 of the two consecutive teeth 8. Specifically, the root surface connects the rear flank 11 of an axially forward tooth with the front flank 10 of an axially rearward tooth of the each two axially consecutive teeth. A first root surface 22 connects the rear flank 11 comprising the rear finishing edge 16 and the front flank 10 comprising the front finishing edge 15. A second root surface 23 connects front and rear flanks 10, 11, which neither have a finishing edge 15, 16. A root radial distance 24 from the central longitudinal axis 3 to a bottom of the first root surface 22 is larger than a root radial distance 25 from the central longitudinal axis 3 to a bottom of the second root surface 23.

The rear finishing edge 16 is located on the same tooth as the most rearward crest cutting edge 14. The front finishing edge 15 is located on the axially rearward next following tooth 8. Thus, the rear finishing edge 16 and the front finishing edge 15 are located on one respective side of the second root surface 22.

The set of front finishing edges consists of a single front finishing edge 15, and the set of rear finishing edges 16 consist of a single rear finishing edge 16, which both are located axially rearward of all crest cutting edges 14.

The set of crest cutting edges consists of the three inclined crest cutting edges 14.

Each crest cutting edge 14 has a crest rake surface 26 formed by a radially outer region of a surface of the chip flute 5. As seen in a transverse cross section of Fig. 3, the crest rake surface 26 forms a crest rake angle α with a straight line that is tangential to the crest cutting edge 14 and the central longitudinal axis 3 of 3°. In the example embodiment, the crest rake angle α of all three crest cutting edges is the same.

Axially rearward of the teeth 8 carrying cutting edges 14, 15, 16, there are teeth 8 without cutting edges.

In the described embodiment, all teeth 8 are based on the same profile for reasons of simple production. When producing the tap using a grinding wheel, the groove/valley is ground into a cylindrical blank such that a helical ridge is formed that has a desired pitch of the teeth 8. When producing the chamfer 18, a radially outer portion of the ridge is ground away in order to from the inclined crest 12. In order to create the flanks for the finishing edges 15, 16, the grinding wheel is pushed less deep radially into the cylindrical blank, so that a first root surface 22 with a larger root radial distance 24 is formed. The valley has the same shape but is less wide than a valley between two inclined crests 12 in the chamfer. Thus, all valleys/grooves are formed using the same grinding wheel. Finally, the chip flute are ground, wherein the crest cutting edges 14, the front and rear finishing edges 15, 16, and rake surfaces including the crest rake surface 26 are formed. The cutting depth of the rear and front finishing edges 15, 16 are decided by the increase in root radial distance of the second root surface 22.

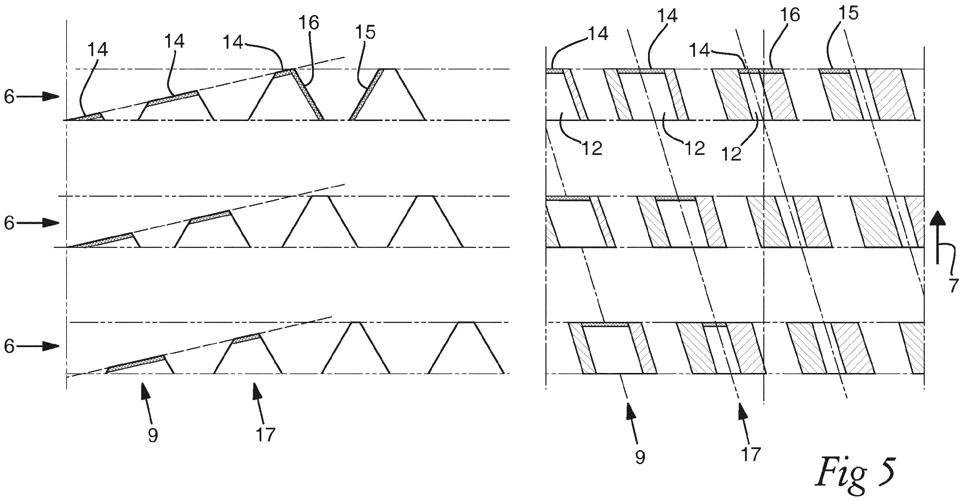

With reference to Figs. 4a - 4c and the diagram of Fig. 5, an example method for how to operate the thread cutting drill tool according to the first embodiment in form of a tap can is described. In the example, the tap is operated to form an internal thread in a hole that has been pre-drilled in a metal workpiece 28 by another tool.

The tap is inserted into the opening of the hole with the central longitudinal aligned with a central longitudinal axis of the hole. The tap is rotated in the direction of rotation 7, which is the direction of rotation for cutting, and at the same time, the tap is advanced axially forward. Each of the forward most tooth 9 of each land 6 first engage with the internal surface of the hole. As the tool is rotated and axially advanced, the crest cutting edges 14 of the forward most teeth 9 cut a first turn of a shallow helix thread grove into the internal surface of the hole.

As the tap is further advanced, the second most forward teeth 17 of the lands 6 enter the hole and into the shallow thread grove cut by the most forward teeth 9. At the same time, the most forward teeth 9, continue to cut a second turn of the thread groove. The second most forward teeth 17 follow behind and cut further material from the bottom of the shallow thread groove, wherein the thread groove becomes deeper. This process is repeated for all teeth 8 of the chamfer 18, wherein more turns of the helical groove are cut. The teeth 8 of the chamfer 18 cut with their crest cutting edges in the radial direction of the tap at their designated maximal radial cutting depth. Thereby, the crest cutting edges 14 leave a more rough surface at the flanks than at the bottom of the helical grove they cut in the hole. However, due to the small crest rake angle α short chips are cut. Furthermore, the straight chip flute 5 causes the chips to break as they are forced against the internal wall of the chip flute when the tap rotates.

In Fig. 4c, the tap has been even further advanced axially forward. As can be seen, in Fig. 4c, the tap has reached a position in the hole where the most rearward crest cutting edge 14 of the chamfer 18 is in the second turn of the helical groove in the hole. The rear finishing edge 16, which is located on the same tooth 8, is also in the second turn of the thread groove. The front finishing edge 15 is in the thread groove of the first turn. As the tap is rotated and advanced, the front and rear finishing edges 15, 16 follow axially behind all crest cutting edges 14 in the cut thread groove and smoothen the rough surface of the flanks of the cut thread groove.

The teeth 8 following axially rearward of the tooth with the single front finishing edge 15 lack cutting edges. These teeth are stability teeth that follow behind the cutting teeth 8 in the thread groove and guide and center the tap during operation.

In case of a blind hole, eventually, the front end 1 of the tap reaches the bottom of the hole. Then, the internal thread is complete and the flanks thereof except the three bottom turns have been smoothened.

In case of a through hole, eventually, the tap is advanced through the hole until the front finishing edge 15 exits the hole on the side opposite to the opening of the hole where the tap was inserted. Then, the internal thread is complete and all the flanks thereof have been smoothened.

Finally, the tap is rotated in the reverse direction and removed from the workpiece.

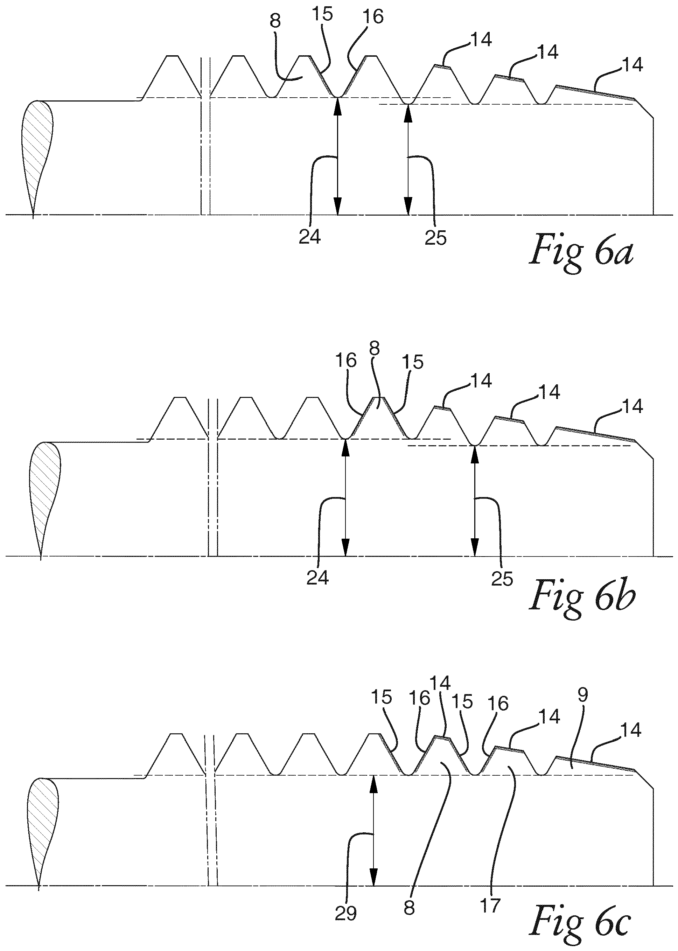

Alternative example embodiments of a thread cutting drill tool according the present invention are described with reference to Fig. 6a - 6c.

The embodiment shown in Fig. 6a and 6b differ from the first embodiment only in the location of the single front finishing edge 15 and the single rear finishing edge 16.

In the embodiment of Fig. 6a, the front and rear finishing edge 15, 16 are located on one respective side of the groove/valley that follows directly axially rearward of the groove/valley axially rearward of the chamfer 18. All teeth 8 of the chamfer 18 have a respective single cutting edge in form of a crest cutting edge 14. The front finishing edge 15 is located on the axially rearward next following tooth 8 and the rear finishing edge 16 the axially next thereafter following tooth 8.

Also in the embodiment of Fig. 6b, all teeth 8 of the chamfer 18 have a respective single cutting edge in form of a crest cutting edge 14. The front and rear finishing edges 15, 16 are located on a respective side of the axially rearward next following tooth 8.

Fig. 6c shows an embodiment where all root surfaces have the same radial root distance 29. Furthermore, the set of front finishing edges and the set of rear finishing edges both comprises two finishing edges 15, 16. In the embodiment, a first pair of front and rear finishing edges 15, 16 are located on one respective side of the most rearward groove/valley in the chamfer 18. A second pair of front and rear finishing edges 15, 16 are located on one respective side of the groove/valley that follows directly axially rearward thereof. The most forward tooth 9 comprises a single cutting edge in form of one crest cutting edge 14. The second next most forward tooth 17 comprises two cutting edges in form of one crest cutting edge 14 and one rear finishing edge 16. The most rearward tooth 8 of the chamfer comprises three cutting edges in form of one crest cutting edge, one front finishing edge 15 and one rear finishing edge 16. The first tooth axially rearward of the chamfer comprises a single cutting edge in form of a front finishing edge 15.

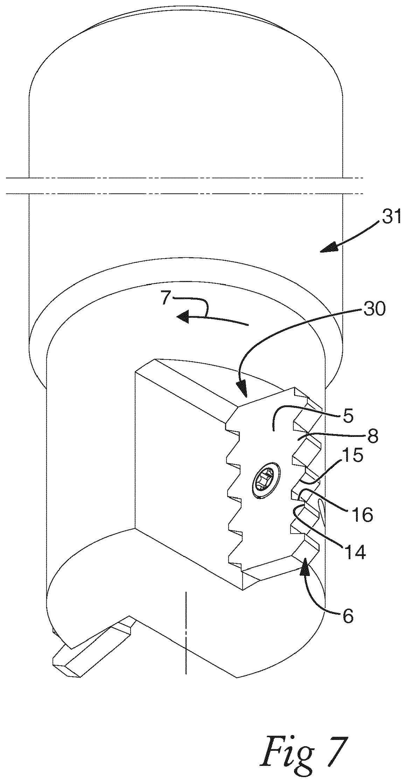

In fig. 7 a cutting insert 30 comprising portion of the chip flute 5, a portion of the land 6, and a portion of five teeth 8. The portion of the teeth comprises three crest cutting edges 14, one rear finishing edge 16 and one front finishing edge 15. The cutting insert 30 is mounted to a holder 31, wherein the cutting insert 30 and the holder 31 together form an embodiment of the thread cutting drill tool.

## Claims

1. A thread cutting drill tool for metal cutting comprising an elongate main body, which
- has a front end (1), a rear end (2) and a central longitudinal axis (3) extending from the front end (1) to the rear end (2),
- is configured rotatable in a direction of rotation (7) around the central longitudinal axis (3), and
- comprises a cutting section (4) which extends axially rearward from the front end (1),
wherein the cutting section (4) comprises
- an axially extending chip flute (5),
- an axially extending land (6), which, in the rotational direction (7) connects to and is trailing the chip flute (5),
- a plurality of axially spaced teeth (8), wherein each tooth (8) of the plurality of teeth extends from the chip flute (5) across the land (6), and comprises
- at least one of an axially forward facing front flank (10) and an axially rearward facing rear flank (11),
- a radially outward facing crest (12), which crest connects to each of the at least one of the front flank (10) and the rear flank (11), and
- at least one cutting edge (14, 15, 16),
wherein the cutting edges of the plurality of teeth comprises a set of crest cutting edges (14), wherein each crest cutting edge (14) is formed by an intersection of the crest (12) of one respective tooth (8) of the plurality of teeth with the chip flute (5),
**characterized in that**
- the cutting edges of the plurality of teeth comprises a set of front finishing edges (15), wherein each front finishing edge (15) is formed by an intersection of the front flank (10) of one respective tooth (8) of the plurality of teeth with the chip flute (5),
- the cutting edges of the plurality of teeth comprises a set of rear finishing edges (16), wherein each rear finishing edge (16) is formed by an intersection of the rear flank (11) of one respective tooth (8) of the plurality of teeth with the chip flute (5), and
- a most forward tooth (9) of the plurality of teeth comprises a first single cutting edge, wherein the first single cutting edge is one of the crest cutting edges (14) of the set of crest cutting edges.

2. The thread cutting drill tool as claimed in any preceding claim, wherein the thread cutting drill tool is configured for a radial cutting depth, and wherein a radial inward extension of the each crest cutting edge (14) is at most the radial cutting depth.

3. The thread cutting drill tool as claimed in any preceding claim, wherein the each crest cutting edge (14) is inclined such that a radial distance from the crest cutting edge (14) to the central axis of rotation (3) increases axially rearward along the each crest cutting edge (14).

4. The thread cutting drill tool as claimed in any preceding claim, wherein a second next most forward tooth (17) of the plurality of teeth comprises a second single cutting edge wherein the second single cutting edge is another one of the crest cutting edges (14) of the set of crest cutting edges.

5. The thread cutting drill tool as claimed in any preceding claim, wherein the set of crest cutting edges comprises at most 5, preferably at most 3, crest cutting edges.

6. The thread cutting drill tool as claimed in any of claims 2 - 5, wherein the each front finishing edge (15) and the each rear finishing edge (16) are configured for a maximal finishing cutting depth of 15 - 70 %, preferably 30 - 35 %, of the maximal radial cutting depth.

7. The thread cutting drill tool as claimed in any preceding claim, wherein the set of front finishing edges (15) and the set of rear finishing edges (16) are located axially rearward of the set of crest cutting edges (14).

8. The thread cutting drill tool as claimed in any preceding claim, wherein
- axially between each two axially consecutive teeth of the plurality of teeth, a root surface connects the rear flank (11) of an axially forward tooth of the each two axially consecutive teeth with the front flank (19) of an axially rearward tooth of the each two axially consecutive teeth,
- at least one of the rear flank (11) and the front flank (10) connected by a first root surface (22) comprises one rear finishing edge (16) of the set of rear finishing edges or one front finishing edge (15) of the set of front finishing edges,
- both the rear flank (11) and the front flank (10) connected by a second root surface (23) lack one rear finishing edge (16) of the set of rear finishing edges and one front finishing edge (15) of the set of front finishing edge,
- the root radial distance (24) of each first root surface (22) is larger than the root radial distance (25) of each second root surface (23).

9. The thread cutting drill tool as claimed in any preceding claim, wherein the plurality of teeth includes a first tooth and a second tooth, which second tooth is located directly axially rearward of the first tooth, wherein
- the first tooth comprises one rear finishing edge (16) of the set of rear finishing edges, and
- the second tooth comprises one front finishing edge (15) of the set of front finishing edges.

10. The thread cutting drill tool as claimed in any preceding claim, wherein the set of front finishing edges includes a single front finishing edge (15), and the set of rear finishing edges includes a single rear finishing edge (16).

11. The thread cutting drill tool as claimed in any preceding claim, wherein at least one tooth of the plurality of teeth comprises two cutting edges, which two cutting edges consist of one crest cutting edge (14) of the set of crest cutting edges, and one rear finishing edge (16) of the set of rear finishing edges.

12. The thread cutting drill tool as claimed in any preceding claim, wherein, adjacent each crest cutting edge (14), the chip flute (5) comprises a crest rake surface 26), and at least each crest rake surface (26) has a crest rake angle α of less than 12°, and preferably of 2 - 4°.

13. The thread cutting drill tool as claimed in any preceding claim, wherein the chip flute (5) is arranged parallel with the central longitudinal axis.

14. The thread cutting drill tool as claimed in any preceding claim, wherein a portion of the chip flute (5), a portion of the land (6), and a portion of at least two teeth (8) of the plurality of teeth are located on a replaceable cutting insert (30), wherein the portion of the at least two teeth comprises at least one crest cutting edge (14) of the set crest cutting edges, at least one rear finishing edge (16) of the set of rear finishing edges and at least one front finishing edge (15) of the set of front finishing edges.

15. The thread cutting drill tool as claimed in any preceding claim, wherein the thread cutting tool comprises at least two of the chip flutes (5) and at least two of the lands (6), wherein the plurality of teeth (8) of all the at least two lands (6) are aligned in the direction of rotation (7) to form a helix interrupted by the chip flutes (5).
